# EUROPEAN PATENT APPLICATION

(11) **EP 1 809 028 A1**
(43) Date of publication of application: **18.07.2007**
(21) Application number: 05766143.1
(22) Date of filing: 22.07.2005
(51) Int. Cl.: H04N 5/445, H04N 5/278, H04N 7/025, H04N 7/03, H04N 7/035

(54) **CAPTIONED STILL IMAGE CONTENT CREATING DEVICE, CAPTIONED STILL IMAGE CONTENT CREATING PROGRAM AND CAPTIONED STILL IMAGE CONTENT CREATING SYSTEM**

(30) Priority: 02.11.2004 JP 2004319389
(71) Applicant: TV ASAHI DATA VISION CORPORATION, Minato-ku, Tokyo, 1060032 (JP); LSI JAPAN CO., LTD., Tokyo 151-0051 (JP)
(72) Inventor: MURAKAMI, Shizuo c/o TV ASAHI DATA VISION CORP, Minato-ku, Tokyo 1060032 (JP); OKAWARA, Kouichi c/o TV ASAHI DATA VISION CORP, Minato-ku, Tokyo 1060032 (JP); TANAKA, Takashi c/o TV ASAHI DATA VISION CORP, Minato-ku, Tokyo 1060032 (JP); WATANABE, Hideo c/o TV ASAHI DATA VISION CORP, Minato-ku, Tokyo 1060032 (JP)
(74) Representative: Haley, Stephen
(86) International application number: PCT/JP2005/013503
(87) International publication number: WO 2006/048963

(57) **Abstract**

There is provided a captioned still picture contents producing technique capable of opening caption broadcasting contents being a closed caption and synthesizing it with a still picture obtained from a TV video to automatically produce new captioned still picture contents. In a captioned still picture contents producing system, a captioned video signal generating apparatus generates a captioned video signal, and a still picture contents producing apparatus produces captioned still picture contents from the captioned video signal. The captioned video signal generating apparatus receives the original video signal and caption signal, and generates a control signal based on whether or not the caption is a real time caption. Then, the captioned video signal generating apparatus synthesizes the caption signal and the video signal and inserts the control signal to a predetermined position to generate a captioned video signal. On the contrary, the still picture contents producing apparatus extracts the caption signal and the control signal from the captioned video signal, and captures the image in the video signal based on the control signal to generate a still picture. At the same time, the still picture contents producing apparatus generates the caption video from the caption signal Then, the still picture contents producing apparatus synthesizes the still picture and the caption image to produce the captioned still picture contents.

## Description

### Technical Field

The present invention relates to a technique of producing captioned still picture contents from a captioned video signal such as caption broadcasting.

### Background Technique

A caption of TV broadcasting is carefully produced so that contents of a TV program can be understood well without a sound. Since a purpose of TV caption broadcasting is an information transmissionmeans for deaf people, sound information such as voices of casts and sound effects in a program is changed into text information. In addition, by using expression for distinguishing speakers, a conversation between plural casts on a screen is changed into the text information. Therefore, the caption during the TV broadcasting is such high quality information that a user can understand contents thereof without listening to the sound.

There is proposed a video information storage apparatus which cuts out a representative image from images having captions by using a caption code as a trigger (see Patent Document 1).

Patent Document 1: Japanese Patent Application Laid-open under No. 10-327386

### Disclosure of Invention

As a technical characteristic, a caption signal is synchronized with a frame of a TV video signal (physical synchronization). On the other hand, the caption signal is synchronized with a scene of program contents as information in terms of caption data (synchronization in meaning). Digital broadcasting has the same characteristics, too.

From these characteristics, by using the caption signal, one still picture can be obtained from the TV video signal (moving picture scene) of the program in terms of the synchronization in meaning. Namely, by using the caption signal as a trigger for capturing a "meaningful still picture", it becomes possible to form new captioned still picture contents with high quality information.

Caption broadcasting is called "closed caption". On the other hand, normal TV broadcasting on which a caption is superimposed is called "open caption". It is an object of this invention to provide a technique of opening caption broadcasting contents being the closed caption and synthesizing it with the still picture obtained from TV video to automatically produce new contents.

### Means for Solving the Problem

In a transmission standard of the caption broadcasting, data structure is made in conformity with an OSI model (Open Systems Interconnection) . The OSI means Open-type System Interconnection Reference Model including 7 layers internationally standardized by ISO (International Standardization Organization). Teletext broadcasting uses definitions shown below, based on the layer model.

(Layer 7) (No Application)

(Layer 6) Presentation: perform presentation of a character, a diagram and an added sound. A foreign character dedicated to teletext broadcasting is used, and a special character such as a name of a person is displayed by transmission (DJCS) of a bit pattern.

(Layer 5) Program: constructed by program management data and page data (including PACI and data unit).

(Layer 4) Data Group: a group of data blocks

(Layer 3) Data Packet: constructed by prefix and data block of 22 bites

(Layer 2) Data Line: constructed by packet synchronizing unit and data packet

(Layer 1) Transmission Path: electric physical signal

In the present invention, in order to precisely set the synthesizing timing of the video and the caption and in order to make a compact processing system, there is contrived a method of executing a control process at the "Layers 2 to 5" being portions near the physical layer of the "OSI layer". Specifically, taking an NTSC system as an example, the method is realized by temporarily storing packet data of a caption portion and digital video data in a memory and the like as binary data after digitizing the TV video signal to execute the definition determination process up to the Layer 5. In addition, as the character used in the caption broadcasting standard, there are a foreign character, a redefined character and the like. In a processing system (equal to or larger than the upper Layer 6, e.g., a system for recognizing a Chinese character code) after decoding the binary data to a character code, system operation may be vague. As a large advantage of the system, this system can prevent such inconvenient trouble.

In addition, in a case of a digital broadcasting system, the same process can be also executed after extracting the video data from a PES as the binary data.

According to one aspect of the present invention, there is provided a captioned still picture contents producing apparatus including : a receiving unit which receives a captioned video signal; an extracting unit which extracts a control signal for producing a caption signal and contents from the captioned video signal; a still picture capturing unit which captures an image in the video signal based on the control signal; a caption image generating unit which generates a caption image based on the caption signal; and a producing unit which synthesizes the caption image and the still picture to produce captioned still picture contents.

As the control signal, the easiest method is to capture and generate a synthesizing timing control signal by a "caption flag" in the PACI and page binary data in a caption packet, which are in a caption packet constitution standard. In this case, since the method is also the method of executing the control process at the "Layers 2 to 5" portions near the physical layer of the "OSI layer", the physical timing is precise. On the contrary, in terms of producing the contents, a method of adding the timing control signal makes it possible to supply excellent contents for the purpose of reflecting an intention of a producer in detail.

The above-mentioned captioned still picture contents producing apparatus produces the captioned still picture contents from the captioned video signal. As the captioned video signal, the video signal of a caption broadcasting program which is broadcast from a broadcasting station is included, for example. The programs of TV and the like are roughly classified into a package program prerecorded in a VTR and a live broadcasting program such as news. When the captions are added to these programs, as for the package program, there are two method: a method of recording the video signal and the caption signal together in the VTR to broadcast them, and a method of recording the video signal into the VTR to add the caption signal to it at the time of the broadcasting, both of which are the package caption programs (hereinafter, referred to as "package caption broadcasting programs"). Additionally, there is a real time caption (also referred to as "live caption") broadcasting program (hereinafter, referred to as "real time caption broadcasting program") in which the caption is added in real time at the time of the live broadcasting of the news program and the like.

It is noted that the captioned video signal may be an analog video signal or a digital video signal, and may be the video signal of the package caption broadcasting program or the video signal of the real time caption broadcasting program.

From the captioned video signal received by the receiving unit, the control signal for producing the caption signal and the contents is extracted. The control signal for producing the contents may include the control signal showing the capture timing of the specific image in the video signal, and based on the control signal, the image in the video signal is captured as the still picture. Meanwhile, based on the extracted caption signal, the caption image corresponding to the characters of the caption is generated. Then, the caption image and the captured still picture are synthesized, and the captioned still picture contents are produced.

The captioned still picture contents are obtained by synthesizing the caption included in the video signal with the still picture of the image corresponding to the caption. Since the contents of the caption broadcasting are normally configured in order to supply main information of the program, by browsing the still picture obtained by synthesizing the caption and the correspondent image, the user can obtain, in a short time, almost equivalent information in comparison with a case that the user actually watches and listens to the caption broadcasting program.

In one form of the above captioned still picture contents producing apparatus, the still picture capturing unit may capture a still picture in the video signal corresponding to each caption signal. Thereby, it becomes possible to adjust the caption and the contents of the still picture included in the captioned still picture contents in terms of the contents and the meaning.

In a preferred example of the above captioned still picture contents producing apparatus, the video signal may be a video signal of a package caption broadcasting program, the extracting unit may extract a caption signal and the control signal from a frame having the caption signal in the video signal, and the still picture capturing unit may capture an image of the frame. In the video signal of the package caption broadcasting program, a position to which the caption is inserted is adjusted to the contents of the image shown by the video signal in terms of the time and the contents- Namely, the captioned video signal is configured in advance so that the caption is inserted onto the image corresponding to the contents of the caption. Therefore, by extracting the caption signal from the frame having the caption signal and synthesizing it with the still picture of the frame image, it becomes possible to produce the captioned still picture contents in which the caption and the image are adjustable in terms of the contents.

In another preferred example of the above captioned still picture contents producing apparatus, the video signal may be a video signal of real time caption broadcasting, the extracting unit may extract a caption signal and the control signal from a frame having the caption signal in the video signal, and the still picture capturing unit may capture an image of another frame positioned behind the frame in terms of time. In the real time caption broadcasting program, since the caption signal is generated in real time on the basis of the live broadcasting sound broadcasted with the video and is added to the video signal, the caption signal is added to the position behind the correspondent image in terms of time. Thus, in the real time caption broadcasting program, the caption is normally displayed behind the correspondent image. Therefore, in the case of the real time caption broadcasting program, the caption signal and the control signal are extracted from the frame having the caption signal, and the frame image corresponding to the caption is captured from the frame positioned behind in terms of time, thereby to generate the still picture. Then, the caption and the still picture are synthesized. Thereby, from the real time caption broadcasting program, it also becomes possible to produce the captioned still picture contents in which the caption and the still picture are adjusted in terms of the contents.

In an example of the above captioned still picture contents producing apparatus, the video signal may be an analog television signal and the extracting unit may extract the control signal during a vertical blanking interval of a frame having a caption signal in the analog television signal. In another example thereof, the video signal may be a digital television signal and the extracting unit may extract the control signal from private data in a PES having a caption signal in the digital television signal.

According to another aspect of the present invention, there is provided a captioned still picture contents producing program executed by a computer terminal, making the computer terminal function as: a receiving unit which receives a captioned video signal; an extracting unit which extracts a control signal for producing a caption signal and contents from the captioned video signal; a still picture capturing unit which captures an image in the video signal based on the control signal; a caption image generating unit which generates a caption image based on the caption signal; and a producing unit which synthesizes the caption image and the still picture to produce captioned still picture contents. By executing the above-mentioned captioned still picture contents producing program on a PC and other computer terminals, the above-mentioned captioned still picture contents producing apparatus can be realized.

According to still another aspect of the present invention, there is provided a captioned still picture contents producing system including a captioned video signal generating apparatus and a still picture contents producing apparatus. The captioned video signal generating apparatus includes: a receiving unit which receives a video signal and a caption signal; a control signal generating unit which generates a control signal based on whether or not the caption is a real time caption; and a signal generating unit which synthesizes the caption signal and the video signal and inserts the control signal to a predetermined position to generate a captioned video signal. The still picture contents producing apparatus includes: a receiving unit which receives the captioned video signal; an extracting unit which extracts the caption signal and the control signal from the captioned video signal; a still picture capturing unit which captures an image in the video signal based on the control signal; a caption image generating unit which generates a caption image based on the caption signal; and a producing unit which synthesizes the caption image and the still picture to produce captioned still picture contents.

In accordance with the above-mentioned captioned still picture contents producing system, the captioned video signal generating apparatus generates the captioned video signal, and the still picture contents producing apparatus produces the captioned still picture contents from the captioned video signal.

The captioned video signal generating apparatus receives the original video signal and the caption signal, and generates the control signal based on whether or not the caption is the real time caption. Then, the captioned video signal generating apparatus synthesizes the caption signal and the video signal and inserts the control signal to the predetermined position to generate the captioned video signal. Meanwhile, the still picture contents producing apparatus extracts the caption signal and the control signal from the captioned video signal, and captures the image in the video signal based on the control signal to generate the still picture. At the same time, the still picture contents producing apparatus generates the caption image from the caption signal. Then, the still picture contents producing apparatus synthesizes the still picture and the caption image to produce the captioned still 1 picture contents,

Since the captioned still picture contents are produced by synthesizing the caption included in the video signal with the still picture of the image corresponding to the caption, by browsing the synthesized picture, the user can obtain, in a short time, almost equivalent information in comparison with a case that the user actually watches and listens to the caption broadcasting program.

In one form of the above captioned still picture contents producing system, the control signal generating unit may generate a control signal which designates a frame image from which the caption signal and the control signal are extracted as an image to be captured by the still picture capturing unit when the caption is not the real time caption, and which designates another frame image behind the frame image in terms of time from which the caption signal and the control signal are extracted, as the image to be captured by the still picture capturing unit when the caption is the real time caption. Thereby, both in the case of the package caption broadcasting program and in the case of the real time caption broadcasting program, it becomes possible to produce the captioned still picture contents in which the caption and the contents of the still picture are adjusted in terms of the contents.

### BRIEF DESCRIPTION OF THE DRAWINGS

FIG. 1 shows an example of an environment towhich a captioned still picture contents producing system according to the present invention is applied;
FIG. 2 shows display image examples of a normal caption broadcasting video signal and captioned still picture contents according to the present invention;
FIG. 3 schematically shows an image of a captioned video signal and a correspondent image, and an outline of a process of producing the captioned still picture contents from a captioned TV video signal;
FIG. 4 shows a position and contents of control information in the captioned video signal;
FIG. 5 shows the position and the contents of the control information in the captioned video signal;
FIG. 6A schematically shows a state of producing the captioned still picture contents in a package broadcasting program, and FIG. 6B schematically shows delay of caption transmission in real time caption broadcasting;
FIG. 7 schematically shows a state of producing the captioned still picture contents in the real time caption broadcasting program;
FIG. 8 is a block diagram showing a system configuration in a broadcasting station;
FIG. 9 shows a main configuration of the captioned still picture contents producing apparatus ;
FIG. 10 shows a configuration of an embodiment of the captioned still picture contents producing apparatus;
FIG. 11 shows a setting example of a control flag in a case of a digital TV video signal; and
FIG. 12 shows an example of the environment to which a captioned still picture contents producing system according to the present invention is applied.

### BRIEF DESCRIPTION OF THE REFERENCE NUMBER

- 10: Broadcasting station
- 20: Caption broadcasting transmission system
- 30: Captioned still picture contents producing apparatus
- 40: Broadcasting wave
- 42: Captioned still picture contents
- 50: User environment
- 52: TV receiver
- 54: Terminal apparatus

### DETAILED DESCRIPTION OF THE PREFERRED EMBODIMENTS

The preferred embodiments of the present invention will now be described below with reference to the attached drawings.

### [First embodiment]

### (Captioned Still Picture Contents Producing System)

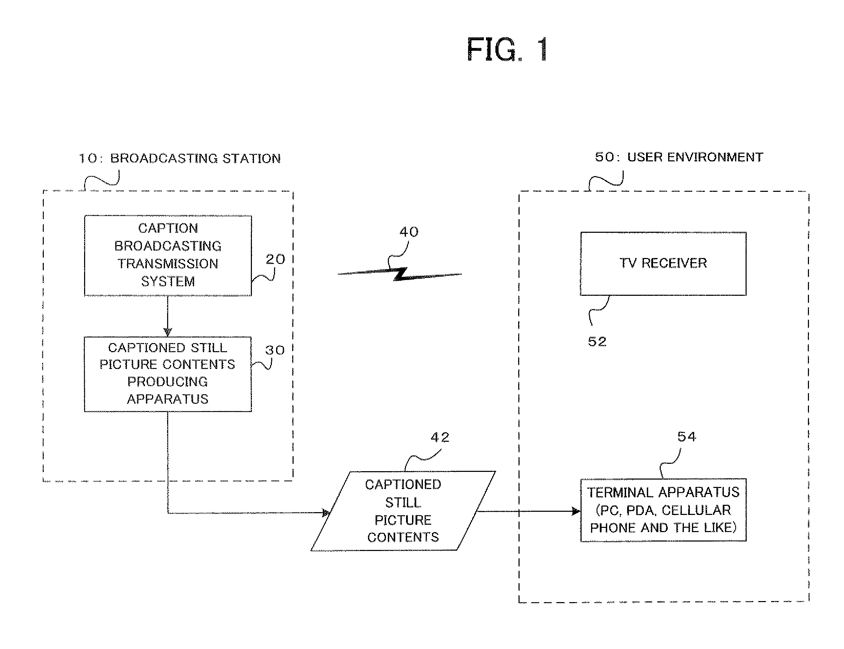

FIG. 1 shows an example of an environment to which the captioned still picture contents producing system according to the present invention is applied. In FIG. 1, a broadcasting station 10 performs caption TV broadcasting to a user environment 50. In the broadcasting station 10, a caption broadcasting transmission system 20 produces a caption broadcasting video signal, and broadcasts it over a broadcasting wave 40. In the user environment 50, the broadcasting wave 40 is received by a TV receiver 52 including a caption tuner, and a captioned broadcasting program can be watched.

Additionally, in the present invention, the caption broadcasting transmission system 20 produces the video signal (hereinafter, referred to as "captioned video signal") to which the control information used at the time of producing the captioned still picture contents is added to the normal caption broadcasting video signal, and supplies it to a captioned still picture contents producing apparatus 30. Namely, the captioned still picture contents producing system according to the present invention is configured by the caption broadcasting transmission system 20 and the captioned still picture contents producing apparatus 30.

The captioned still picture contents producing apparatus 30 produces captioned still picture contents 42 by using the captioned video signal supplied from the caption broadcasting transmission system 20. The captioned still picture contents 42 are still picture contents with which the caption is synthesized, and are supplied to the user by various kinds of transmission methods, such as broadcasting, the Internet, other data communication, and distribution by a storage medium. The user can browse the captioned still picture contents 42 by a terminal apparatus 54 such as a PC, a PDA, a cellular phone, an electronic book and the like.

The captioned still picture contents are contents obtained by synthesizing the still picture making up the caption broadcast ing program and the caption displayed during the caption broadcasting. As described above, the caption in the caption broadcasting program is such high quality information that program contents thereof can be understood well without listening to sound. Therefore, by browsing the captioned still picture contents, the user can obtain almost equivalent information in comparison with the case that the user watches and listens to the caption broadcasting program. (Captioned Still Picture Contents)

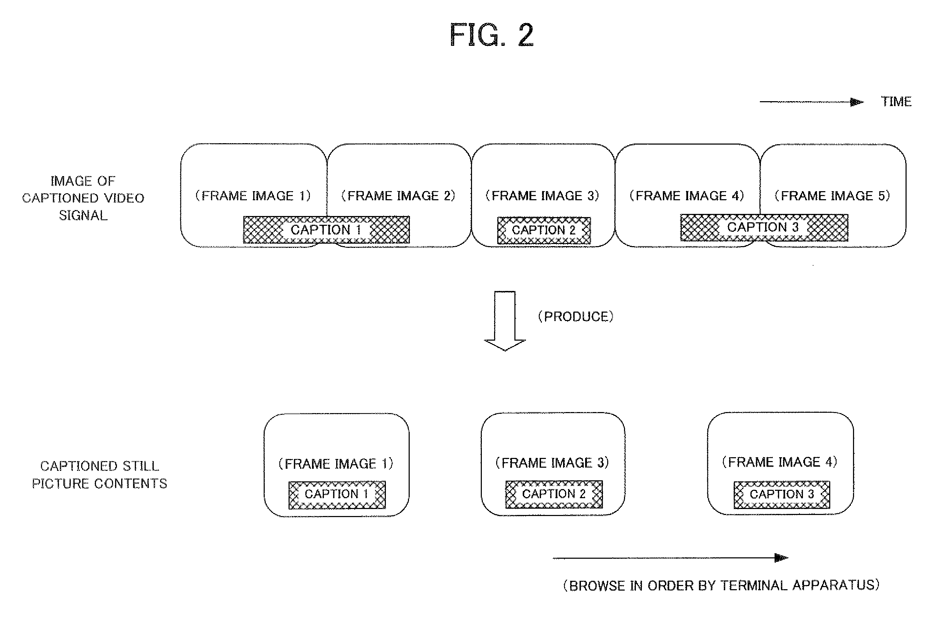

Next, the description will be schematically given of the captioned still picture contents. FIG. 2 shows display image examples of the normal caption broadcasting video signal and the captioned still picture contents according to the present invention. As shown at an upper portion in FIG. 2, it is assumed that the caption broadcasting video signal is configured so that a caption 1 is displayed on frame images 1 and 2, a caption 2 is displayed on a frame image 3 and a caption 3 is displayed on frame images 4 and 5 in the frame images 1 to 5 during the caption broadcasting. In this case, as the captioned still picture contents of the present invention, as shown at an lower portion of FIG. 2, the still picture in which the frame image 1 and the caption 1 are synthesized, the still picture in which the frame image 3 and the caption 2 are synthesized and the still picture in which the frame image 4 and the caption 3 are synthesized are produced. Like this, in the present invention, by capturing the frame image corresponding to the caption by using the caption as a basis, and by synthesizing the captured frame image and the caption, the captioned still picture is produced. Thereby, all the captions included in the original caption broadcasting video signal are included in the captioned still picture contents. Namely, since all the captions being the important information in the caption broadcasting can be taken in the still picture contents without exception, by browsing the produced captioned still picture contents, the user can obtain almost equivalent information in comparison with the case that the user watches and listens to the original caption broadcasting program.

In addition, since the captioned still picture contents are a group of the still pictures arranged based on a time series, by using the terminal apparatus such as a PC, a PDA, a cellular phone, an electronic book and the like, the user usually reproduces and browses the captioned still picture contents in accordance with the order.

### (Outline of Producing Method of Captioned Still Picture Contents)

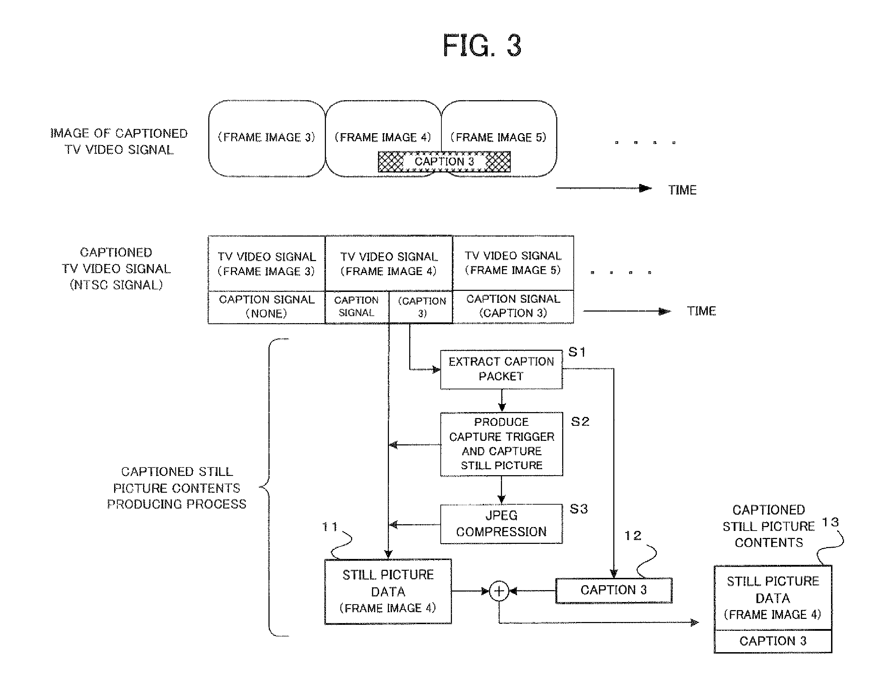

Next, the description will be given of an outline of a producing method of the captioned still picture contents. FIG. 3 schematically shows the captioned video signal, images corresponding to it and an outline of a producing process of the captioned still picture contents from the captioned TV video signal. In this example, as shown at an upper portion of FIG. 3, the images in the captioned TV video signal include the frame images 3 to 5, wherein the frame image 3 has no caption and the frame images 4 and 5 have the caption 3. Namely, as shown at a middle portion of FIG. 3, in the captioned TV video signal, the frame image 3 has no caption signal, but the frame images 4 and 5 have the caption signal of the caption 3.

In this case, the producing process of the captioned still picture contents first detects the caption signal in the frame image. In this example, the frame image having the caption signal, i.e. , the frame image 4, is detected, and the caption packet having the caption signal is extracted (step S1). The caption packet includes the control information, which will be explained later. Since the control information has information indicating timing of capturing the frame image of the captioned TV video signal, in the producing process of the captioned still picture contents, the control signal is extracted, and a capture trigger indicating the timing of capturing the frame image of the TV video signal is generated in accordance with the contents thereof. Based on the capture trigger, the correspondent frame image is captured (step S2) . The captured frame image is JPEG-compressed, and still picture data 11 is produced (step S3).

On the other hand, the caption data of the caption 3 is extracted from the caption packet extracted in step S1, and the caption image 12 corresponding to the caption is generated. Then, the still picture data 11 corresponding to the frame image 4 and the caption image 12 corresponding to the caption 3 are synthesized, and thereby captioned still picture contents 13 is produced.

Like this, in the producing process of the captioned still picture contents, the caption packet is extracted from the frame image having the caption, out of the frame images in the captioned TV video signal, and based on the control signal included therein, the frame image to be captured as the still picture is determined. Then, the still picture captured in accordance with the control signal and the caption image corresponding to the capture data included in the caption packet are synthesized, and thereby the captioned still picture contents are produced.

### (Control Signal)

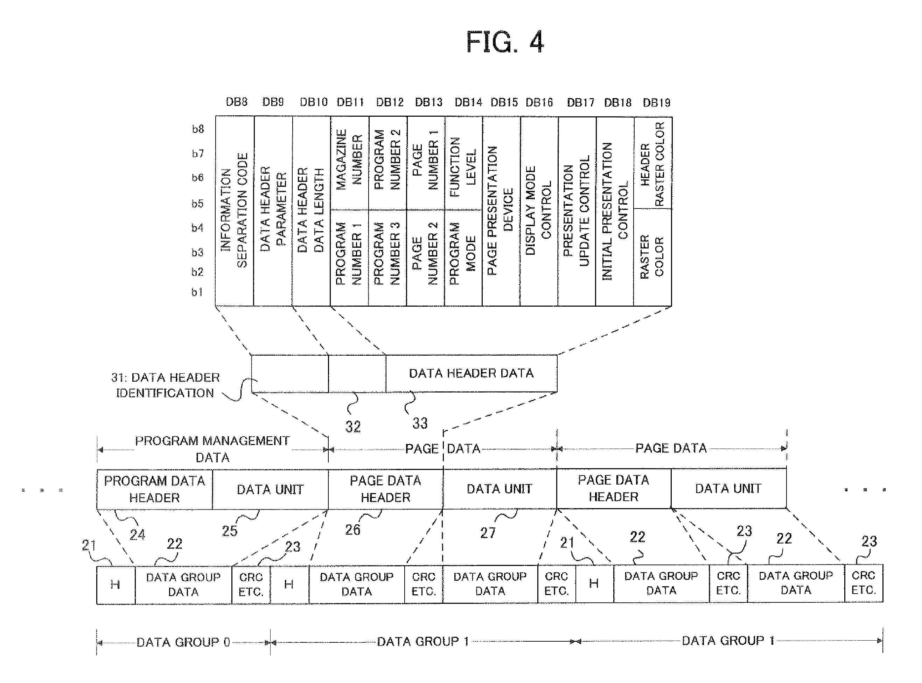

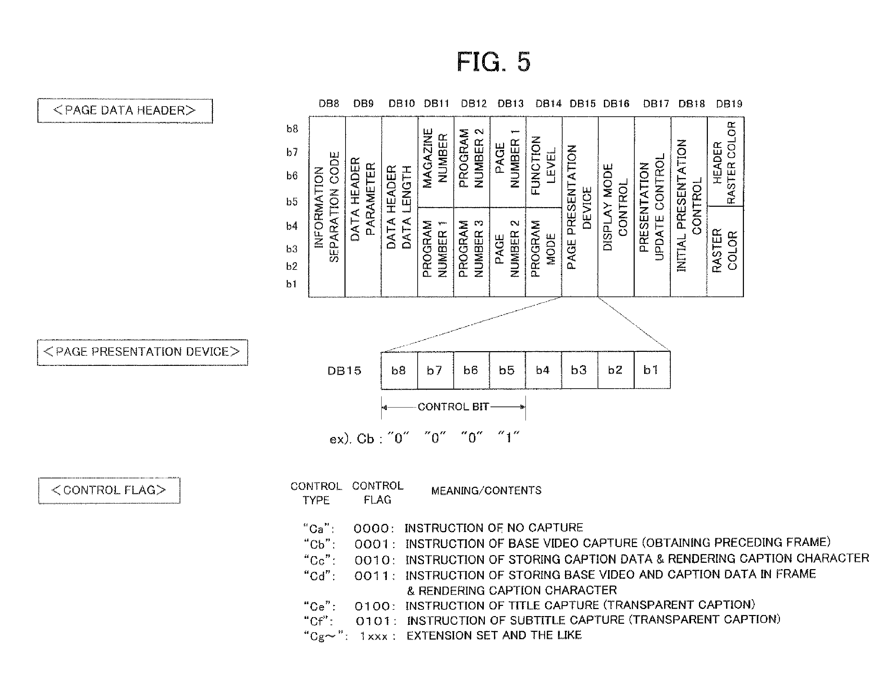

Next, the description will be given of the control signal used at the time of producing the captioned still picture contents in detail. FIG. 4 and FIG. 5 show positions and contents of the control information in the captioned video signal. In this example, it is prescribed that the captioned video signal is an analog TV video signal in conformity with a teletext broadcasting standard. In an analog captioned video signal, the information relating to the caption data and the caption is inserted to a vertical blanking interval of the TV video signal. In this example, particularly, it is prescribed that the control signal is set to bit numbers b5 to b8 of "a page presentation device (DB15)" of a page data header (PACI) in the teletext broadcasting standard.

FIG. 4 shows a configuration of a page header of the teletext broadcasting. Among the teletext broadcasting data, a header (H) 21, data group data 22 and information 23 such as CRC are included in data groups 0 to 3 shown in a bottom portion in FIG. 4, respectively. Among them, the data group data 22 in the data group 0 corresponds to grogrammanagement data, and the programmanagement data includes a program data header 24 and data unit 25. On the other hand, the data group data 22 in the data groups 1 and 2 correspond to a page data header 26 and a data uni t 27 in the page data, respectively

The page data header 26 in the page data includes data header identification 31, data header data length 32 and data header data 32. The data header identification 31 includes an information separation code DB8 and a data header parameter DB9. On the other hand, as shown in the upper portion of FIG. 4, data header data 33 includes various kinds of information, i.e., program number, magazine number DB11 to raster color and header raster color DB19, and the page presentation device DB15 is included therein.

FIG. 5 shows configurations of the page data header 26 and the page presentation device DB15, and an example of a control flag. As shown in FIG. 5, the page presentation device DB15 has 8 bits from b1 to b8, and 4 bits from b5 to b8 are used as the control bit for setting the control signal of the present invention. In addition, when both of the control bits b4 and b3 of a program mode DB14 in the page data header are "1" (in a state of "ON"), i.e., when both of them are "11"= "caption", these control bits become effective.

Meanings of the control flags set to the control bits b5 to b8 are shown at a bottom portion of FIG. 5. As shown in a middle portion of FIG. 5, when the control type is Cb for example, the control bits b8 to b5 are set to "0", "0", "0" and "1" respectively, and the control flag becomes "0001". It is noted that control types Ca to Cg are given for ease of explanation, in order to distinguish kinds of control.

When the above-mentioned caption broadcasting transmission system 20 generates the captioned video signal, these control flags are set in the broadcasting station. Namely, the control information is already included in the captioned video signal outputted by the caption broadcasting transmission system 20.

In the package caption broadcasting program, since the caption is inserted to the TV video signal recorded into the VTR, the TV image and the caption can be properly correspondent in terms of time and contents. Namely, the caption is inserted to the appropriate frame image in the TV image. Therefore, when the captioned still picture contents are generated from the package caption broadcasting program, the frame image including the caption may be detected, and the still picture of the frame image and the caption included in the video signal of the frame image may be synthesized.

Thus, to the captioned video signal of the package caption broadcasting program, the control flag "0011" of the control type Cd is set. The control flag "0011" corresponds to the capture of the base video in the frame, the storage of the caption data and instruction of character rendering of the caption. Therefore, when the control flag "0011" is detected, the frame image of the frame is captured and the still picture is produced. Then, the caption in the frame is extracted to the produced still picture and is rendered (the image is generated) to be synthesized.

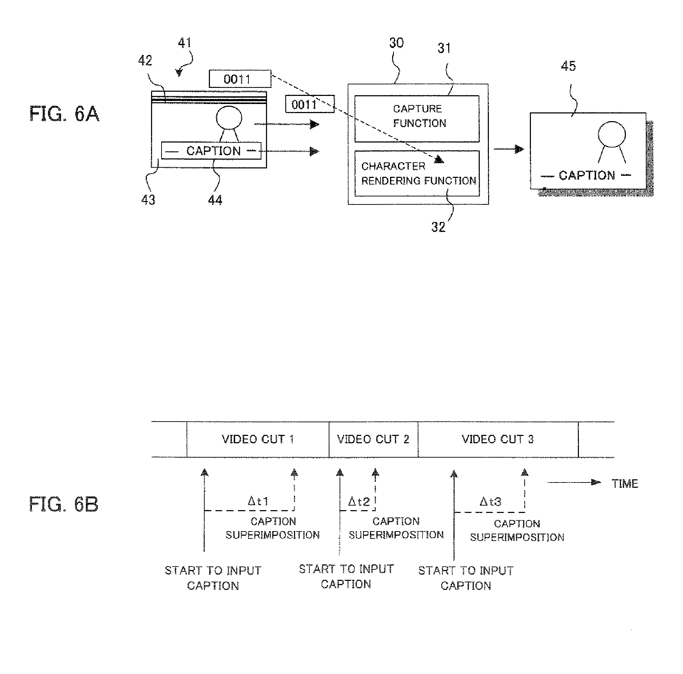

FIG. 6A schematically shows a state of producing the captioned still picture contents in the package broadcasting program. A frame image 41 of the package caption broadcasting program includes a frame image 43 being the base image and caption data 44, and further the control flag "0011" is inserted to the VBI 42. When detecting the control flag "0011", the captioned still picture contents producing apparatus 30 captures the frame image 41 by a capture function 31, and extracts the caption data 44 included in the frame to perform the character rendering by a character rendering function 32. Then, the captioned still picture contents producing apparatus 30 synthesizes the captured still picture and the rendered character to produce captured still picture contents 45.

On the other hand, in the case of the real time caption broadcasting program, the caption is generated in real time and is inserted to the TV video to be broadcast during the live broadcasting of the TV video. Therefore, the caption is displayed behind the broadcasting of the TV video in terms of time. The description will be briefly given of the delay of the caption transmission in the real time caption broadcasting below. In the live TV programs such as news program, the caption broadcasting is increased as service for deaf people. In the real time (live) caption broadcasting, the caption is sometimes broadcasted behind the video by several to tens seconds. If the delay is large, viewers may feel uncomfortable.

In the analog broadcasting, the caption data is superimposed to the vertical blanking interval (VBI) of the video signal in correspondence with the image. In the package caption broadcasting program, it is possible that the caption is produced in advance and the caption data is transmitted by the page unit in timing completely corresponding to the video. However, in the real time caption program, as shown in FIG. 6B, a superimposition timing of the caption is not real time but is delayed a little. While watching the broadcast video, a person in charge of inputting the caption at the broadcasting station inputs a caption sentence by a keyboard and performs conversion into Chinese character and revision of the erroneous conversion. Afterward, the person superimposes the data. Therefore, the transmission of the caption data is behind the video. In FIG. 6B, a shift between caption inputting start timing and timing at which the correspondent caption data is superimposed, i.e., a caption transmission delay time, is indicated as At.

Therefore, in a case of a news program for example, when an announcer reads a news article, contents thereof are obtained by voice recognition and the like and the caption thereof is generated to be added to the TV video. Therefore, the caption is sometimes inserted after the video corresponding to a news item thereof and the voice of the announcer end and a next news item starts. As the method of generating the real time caption, there are known a voice recognition system of using the voice recognition based on utterance of the announcer and a keyboard system of generating the caption by key input of the broadcasting sound by an inputting operator.

Thus, in the captioned video signal of the real time caption broadcasting program, the contents of the video (frame image) are not correspondent to the caption in terms of time. Namely, the caption corresponding to a certain image is included in the signal of the frame image behind several to hundreds frames with respect to the certain image in terms of time. Therefore, in a case that the captioned still picture contents are produced from the real time caption broadcasting program, it is necessary that the capture timing of the still picture and the caption extracting timing are different.

Hence, for the captioned video signal of the real time caption broadcasting program, two control types, i.e., the control types Cb and Cc, are used. The control flag "0001" of the control type Cb is the capture instruction of the base video, and the control flag "0010" of the control type Cc is the instruction of the storage of the caption data and character rendering of the caption Normally, in the captioned video signal of the real time caption broadcasting program, the control flag "0001" corresponding to the capture instruction of the base video appears, and behind several frames, the control flag "0010" corresponding to the storage of the character data and rendering appears.

As a method of making the video/sound information coincide with the real time caption transmitted behind, in addition to the above-mentioned method of using the control bit, a method of transmitting a transparent caption page for notifying the capture input start timing of the receiver is possible.

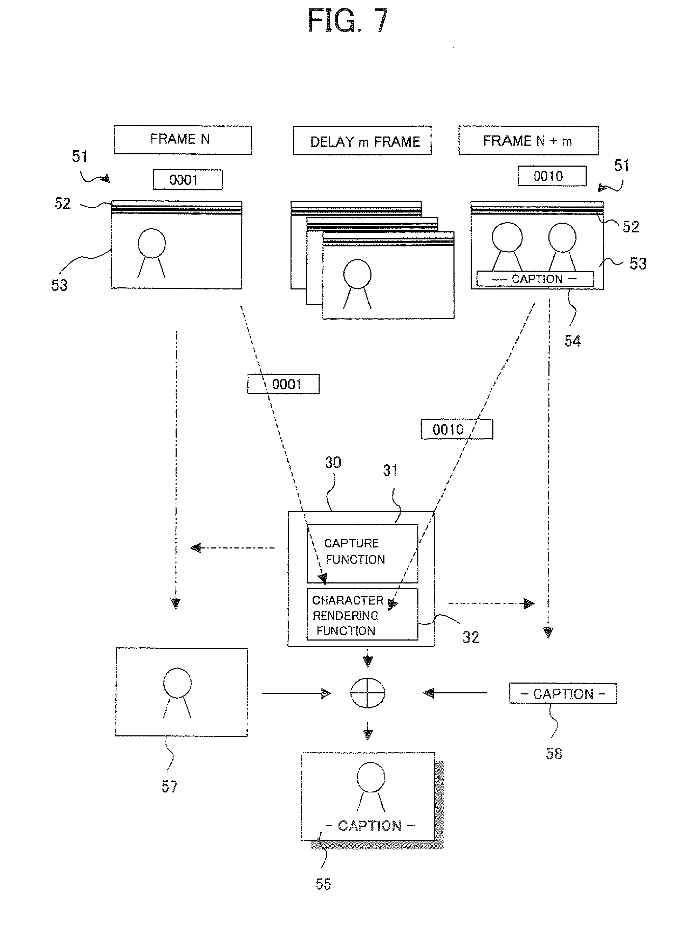

FIG. 7 schematically shows a state of producing the captioned still picture contents in the real time caption broadcasting program. A frame image 51 of the real time caption broadcasting program includes a frame image 53 being the base video, and further the control flag "0001" is inserted to the VBI 52. However, as described above, in the real time caption broadcasting, with respect to a certain video (frame image), the correspondent caption is included in the frame behind the several frames. In the example of FIG. 7, the VBI 52 of the Nth frame includes the control flag "0001" and no caption data. Caption data 54 and the control flag "0010" are included in the VBI 52 of a (N+m) the frame, which is m frames behind the frame N.

First, when detecting the control flag "0001" of the Nth frame, the captioned still picture contents producing apparatus 30 captures the frame image 53 by the capture function 31 in accordance with the control contents (see FIG. 5). Next, when detecting the control flag "0010" of the (N+m) th frame, the captioned still picture contents producing apparatus 30 extracts the caption data 54 included in the frame, and performs the character rendering by the character rendering function 32. Then, the captioned still picture contents producing apparatus 30 synthesizes the captured still picture 57 and the character image 58 obtained by the rendering to produce the captioned still picture contents 55.

Like this, in the present invention, by setting the different control signals to the package caption broadcasting program and the real time caption broadcasting program, it becomes possible to produce the captioned still picture contents from both caption broadcasting programs. Particularly, when the real time caption broadcasting program is watched by the TV receiver and the like, the caption is displayed behind the correspondent video. Therefore, when the delay is large, it is sometimes difficult to understand the contents. As for this point, in the captioned still picture contents produced by the present invention, the delay is corrected, the video and the caption are adjusted and the caption is displayed on the correspondent video. Hence, it becomes possible to easily understand the contents.

As the control flags shown in FIG. 5, in addition to the above-mentioned instructions, an instruction without the capture (control type Ca), showing that the capture of the base video is not performed, is also prepared. The control type Ca is used in a case that all the flags of 4 bits are not set to "1", and initial setting of a control apparatus is also the control type Ca. In addition, in order to arrange the format of the service for each program, the control types Ce to Cg are set as the need arises. Specifically, the frames corresponding to a main title portion (program start portion) and the program end portion of the program are prescribed as transparent caption pages (invisible pages produced by making a display color and a background color of the displayed character same as the raster color), and the control type Ce is set. Thereby, even when the captions are not originally inserted to the frame images at the time of start and end of the program, these frame images can be captured as the still pictures. Thereby, the still pictures of the front and end pages of the captioned still picture contents file of a certain program can be produced. In addition, similarly, even when the caption is not included in the frame image having the display of a subtitle and "the second story" of a drama, in order to capture these frame images, the control type Cf is set as the transparent caption page.

### (System in Broadcasting Station)

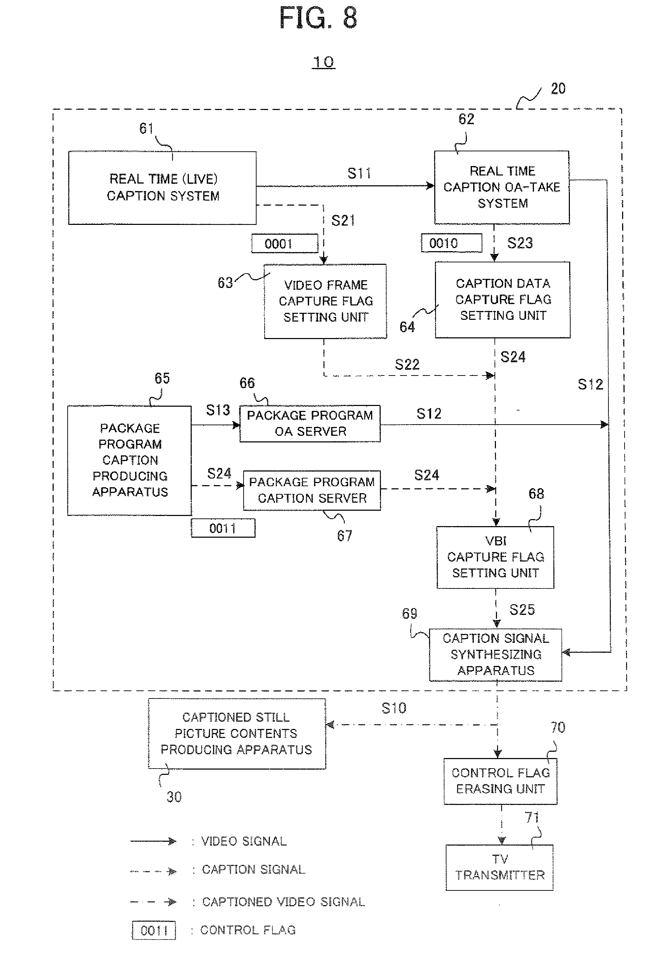

Next, the detailed description will be given of the system in the broadcasting station shown in FIG. 1. FIG. 8 is a block diagram showing a system configuration in the broadcasting station 10 . The broadcasting station 10 includes the caption broadcasting transmission system 20, the captioned still picture contents producing apparatus 30, a control flag erasing unit 70 and a TV transmitter 71.

The caption broadcasting transmission system 20 generates a captioned video signal S10 having the above-mentioned control flag, and supplies it to the captioned still picture contents producing apparatus 30 and the control flag erasing unit 70. As schematically explained above, the captioned still picture contents producing apparatus 30 produces the captioned still picture contents from the captioned video signal.

The control flag erasing unit 70 erases the above-mentioned control flag from the captioned video signal produced by the caption broadcasting transmission system 20. The control flag becomes necessary when the captioned still picture contents producing apparatus 30 produces the captioned still picture contents. However, when the broadcasting is performed from the broadcasting station 10 to homes of viewers, the control flag is preferably erased in terms of preventing the wrong use by the user and an error operation of the system on the side of the user. Hence, the control flag erasing unit 70 erases the above-mentioned control flag from the captioned video signal, and the TV transmitter 71 broadcasts the normal caption broadcasting video signal having no control flag.

### (Caption Broadcasting Transmission System)

Next, the description will be given of the caption broadcasting transmission system. As shown in FIG. 8, the caption broadcasting transmission system 20 generates the captioned video signal of the real time caption broadcasting program and the package caption broadcasting program. As for the real time caption broadcasting program, a real time caption system 61 supplies a video signal S11 to a real time caption OA-TAKE system 62, and supplies a caption signal S21 to a video frame capture flag setting unit 67.

The video frame capture flag setting unit 67 sets the control flag "0001" of the control type Cb to the frame image to which the caption in the video signal should be added, and outputs a caption signal S22 thereof. As for the setting of the control flag "0001", when the real time caption is the voice recognition system, pronunciation detection and a cuff key of a narrator (announcer or respeaker) can be used as triggers. On the contrary, when the real time caption is a keyboard system, the system can automatically set the control flag "0001" based on a predetermined trigger determined by the system.

The real time caption OA-TAKE system 62 outputs a video signal S12 to a caption signal synthesizing apparatus 69, and outputs a caption signal S23 to a caption data capture flag setting unit 64. The caption data capture flag setting unit 64 sets the control flag "0010" of the control type Cd to the frame image, in the caption signal S23, for which the caption data should be captured, and outputs a caption signal S24. It is noted chat setting of the control flag "0010" can be performed in accordance with "TAKE" instruction by a director, for example.

The VBI capture flag setting unit 68 receives the caption signals S22 and S24 to which the control flags "0001" and "0010" are set, and outputs, to the caption signal synthesizing apparatus 69, a caption signal S25 including those flags in the above-mentioned position (see FIG. 5) in the VBl. The caption signal synthesizing apparatus 69 synthesizes the video signal S12 and the caption signal S25 to which the above-mentioned two control flags are set, and generates the captioned video signal S10 to supply it to the captioned still picture contents producing apparatus 30 and the control flag erasing unit 70. In this way, the captioned video signal of the real time caption broadcasting program is generated.

On the other hand, in the case of the package caption broadcasting program, a package program caption producing apparatus 65 supplies a video signal S13 to a package program OA server 66. The package program OA server 66 outputs the video signal S12 to the caption signal synthesizing apparatus 69. In addition, the package program caption producing apparatus 65 sets the control flag "0011" of the control type Cd to the frame having the caption, and outputs the caption signal S24 to the package program caption server 67. The package program caption server 67 transmits the caption signal S24 to the VBI capture flag setting unit 68. The VBI capture flag setting unit 68 transmits, to the caption signal synthesizing apparatus 69, the caption signal S25 having the control flag "0011" at the above-mentioned position (see FIG. 5) in the VBI. The caption signal synthesizing apparatus 69 synthesizes the video signal S12 and the caption signal S25 to which the above-mentioned control flag is set, and makes the captioned video signal S10 to supply it to the captioned still picture contents producing apparatus 30 and the control flag erasing unit 70. Thus the captioned video signal of the package caption broadcasting program is generated.

### (Captioned Still Picture Contents Producing Apparatus)

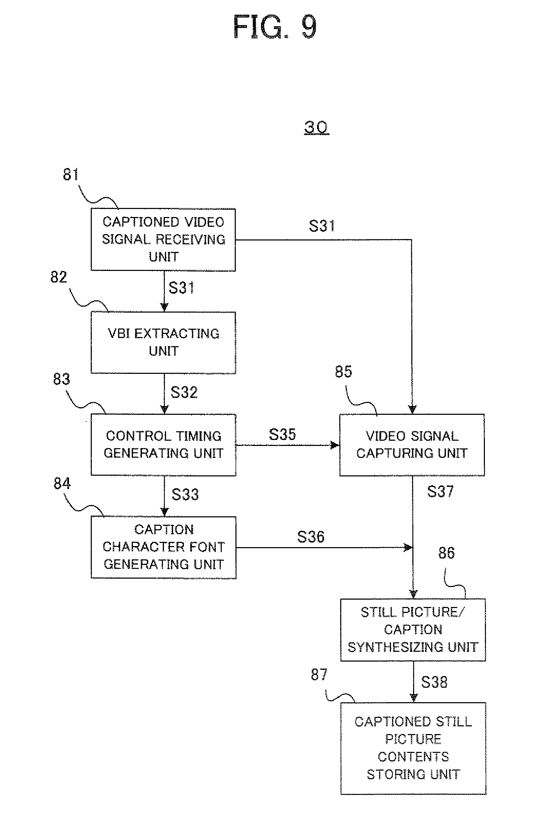

Next, the description will be given of the captioned still picture contents producing apparatus. FIG. 9 shows the main configuration of the captioned still picture contents producing apparatus 30. In FIG. 9, a captioned video signal receiving unit 81 receives the captioned video signal from the above-mentioned caption broadcasting transmission system 20, and supplies a video signal S31 to a VBI extracting unit 82 and a video signal capturing unit 85. The VBI extracting unit 82 extracts the above-mentioned control flag S32 from the VBI of the captioned video signal S31 to transmit it to a control timing generating unit 83. The control timing generating unit 83 generates a timing signal S35 showing the timing of capturing the video signal frame image in accordance with the control flag S32 to transmit it to the video signal capturing unit 85. The video signal capturing unit 85 captures the specific frame image in the video signal S31 in accordance with the timing signal 535, and transmits it to a still picture/caption synthesizing unit 86 as a still picture signal S37.

On the other hand, the control timing generating unit 83 extracts caption data S33 from the caption signal in accordance with the control flag S32 to transmit it to a caption character font generating unit 84. The caption character font generating unit 84 generates a caption character font S36 based on the caption data S33 to transmit it to the still picture/caption synthesizing unit 86.

The still picture/caption synthesizing unit 86 synthesizes the caption character font S36 and the still picture signal S37, and produces a captioned still picture S38 to transmit it to a captioned still picture contents storing unit 87. The captioned still picture contents storing unit 87 arranges the plural captioned still pictures in time series, and stores them as the captioned still picture contents. Namely, the captioned still picture contents are contents in which the plural captioned still pictures are arranged in time series, and include the plural captioned still pictures and time information or order information showing an order thereof.

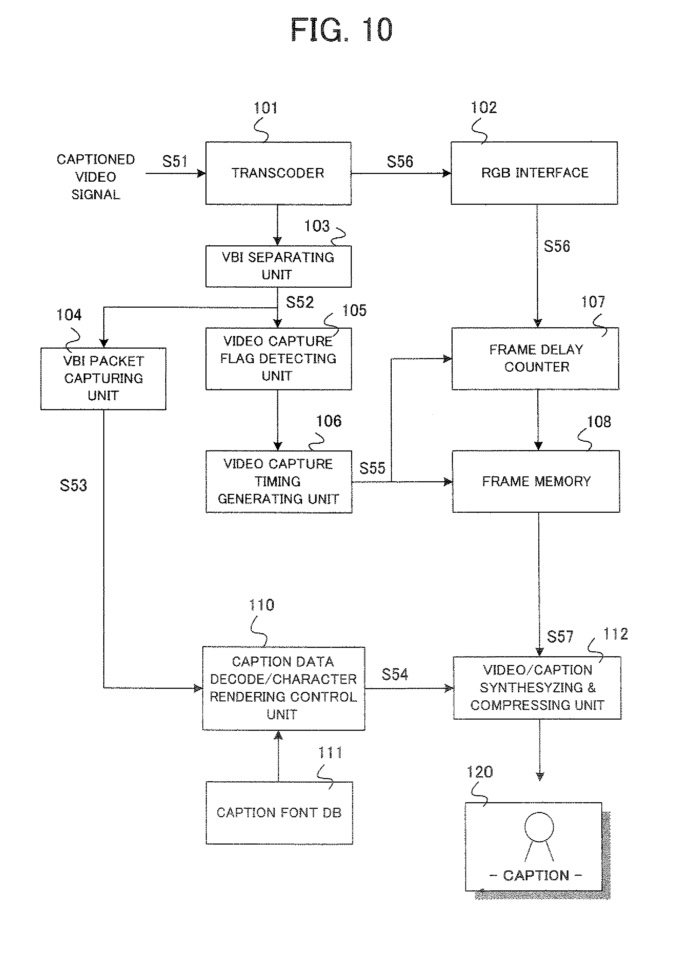

Next, the description will be given of an embodiment of the captioned still picture contents producing apparatus. FIG. 10 shows a configuration of an embodiment of the captioned still picture contents producing apparatus. In FIG. 10, a captioned video signal S51 supplied from the caption broadcasting transmission system 20 is inputted to a transcoder 101. The captioned video signal S51 is inputted as an NTSC signal (D2 signal), and the transcoder 101 outputs it to a VBI separating unit 103, and converts it to an RGB signal (D1) to supply it to an RGB interface 102 as a signal S56. The VBI separating unit 103 separates the VBI from the video signal, and supplies it to a VBI packet capturing unit 104 and a video capture flag detecting unit 105 as a VBI signal S52. The VBI packet capturing unit 104 extracts caption data S53 from the VBI signal S52, and supplies it to a caption data decode/character rendering control unit 110. The caption data decode/character rendering control unit 110 decodes the caption data S53 and obtains the character of the caption. Further, the caption data decode/character rendering control unit 110 obtains the correspondent character font from a caption font DB111 including a ROM and the like, and performs the character rendering to transmit a generated character image S54 to a video/caption synthesizing and compressing unit 112.

On the other hand, the video capture flag detecting unit 105 extracts the above-mentioned, control flag from the VBI signal S52 to transmit it to a video capture timing generating unit 106. The video capture timing generating unit 106 generates a capture timing signal S55 of the specific frame image in the video signal based on the contents of the control flag to transmit it to a frame delay counter 107 and a frame memory 108. The video signal S56 is transmitted to the frame delay counter 107 from the RGB interface 102. The frame delay counter 107 specifies the frame image showed by the capture timing signal in the video signal S56, and captures it to temporarily store it in the frame memory 108 as the still picture. As the need arises, the frame delay counter 107 can change the frame image to be captured as the still picture into the preceding or subsequent frame image within the range of several frames. The still picture stored in the frame memory 108 is transmitted to the video/caption synthesizing and compressing unit 112 as a captured still picture S57.

The video/caption synthesizing and compressing unit 112 executes a predetermined process such as interlace/flicker removal space filtering, and afterwards synthesizes the character image S54 of the caption and the still picture S57. Further, the video/caption synthesizing and compressing unit 112 JPEG-compresses the synthesized still picture to output it as a captioned still picture 120, for example. The plural captioned still pictures 120 thus produced are temporarily stored in the memory and the like to be completed as the captioned still picture contents with the information showing the order added.

### [Another Embodiment]

The above-mentioned embodiment shows the case that the captioned video signal is he analog TV video signal, but the present invention is also applicable when the captioned video signal is the digital TV video signal.

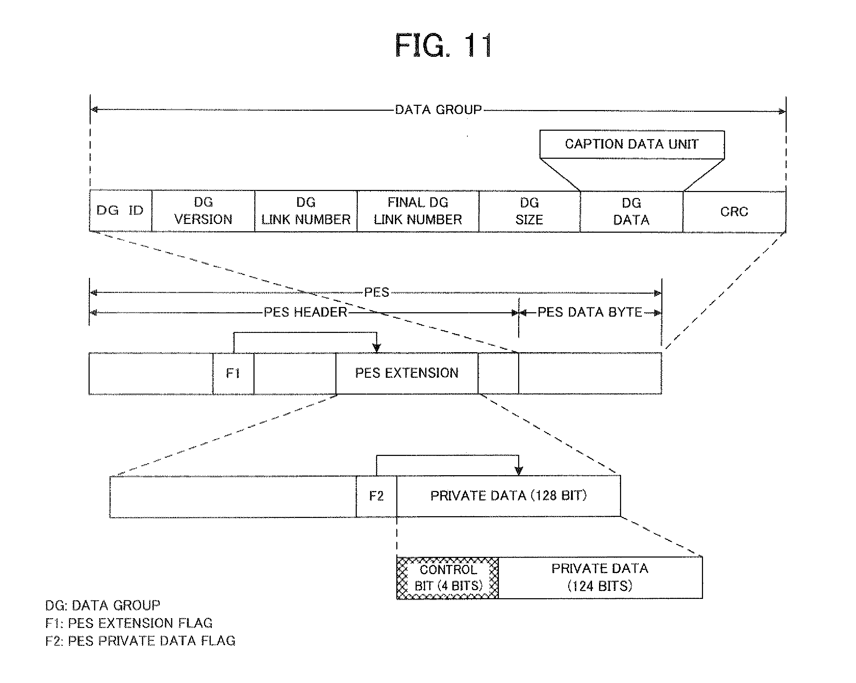

The description will be given of a setting method of the control flag in the case of the digital TV video signal, with reference to FIG. 11. In an ARIB standard, it is defined that as a method of transmitting the caption, first, a caption data unit including the caption data by the page unit is configured as the data group, which is broadcast on a TS (Transport Stream) as the PES (Packetized Elementary Stream) included in a data byte. Judging from the purpose of the present invention, though it is necessary to transmit the control flag by the caption page unit, since at least one PES is generated for each caption page; it is appropriate that the control flag is included somewhere in the PES.

Layer structure from the data group to PES and the locations of the control flag are shown in FIG. 11. As shown in FIG. 11, since there is no place appropriate for including the control flag in the data group, as one method, the above-mentioned control bit of 4 bits is ensured in a private data area of 128 bytes in a PES header, and the control flag is set. It is thought that the area is preferable because an undertaker can use the area.

In addition, as another method, there is thought a method of including the control flag by adding a new field to one portion of the existing data structure such as the PES, the data group and the caption sentence data by the page unit. However, since this case is out of the ARIB standard, compatibility of a related apparatus has to be considered. Additionally, the signal to which the control flag is set is prescribed to be used only in the broadcasting station, and has to be erased before broadcasting.

As still another method, an independent data transmission path other than the caption data and the caption PES may be provided from a generator of the control flag to the captioned still picture contents producing apparatus 30, and by using the transmission path, the control flag may be supplied to the captioned still picture contents producing apparatus 30. In this case, such the separate transmission path is necessary. However, since the control flag is not inserted to the video signal, it becomes unnecessary to erase them before the broadcasting.

The configurations of the caption broadcasting transmission system 20 and the captioned still picture contents producing apparatus 30 in the case of the digital TV video signal are different from the configurations in the case of the analog TV video signal, in that the caption data extraction, the still picture capture and other processes are executed to the digital TV video signal. But the process itself is executed similarly to the case of the analog TV video signal-Above, the description was given of the embodiment for transmitting the control flag based on a caption data transmission format in teletext service of the analog broadcasting and the digital broadcasting in Japan to control the capturing of the captioned still picture. Needless to say, the still picture contents producing method of the present invention is also applicable in various teletext systems of all the countries in the world by appropriately choosing the transmission path of the control flag.

For example, in a case of the closed caption in the teletext service of the United States, as for the analog broadcasting, based on a CEA-608-B standard (Line 21 Data Services), it is possible to use an optional header extension field extensible in a record header of a telelext record transmitting the caption page to transmit the flag in this field. In addition, in the case of the digital broadcasting, based on a CEA-708-B standard (Digital Television (DTV) Closed Captioning), it is possible to transmit the similar flag in the captioning data transmitted by a VIDEO user's bit of a MPEG-2 bit stream and control the capture.

### [Modification]

In the above-mentioned embodiment, as shown in FIG. 1, the captioned still picture contents producing apparatus 30 is set in the broadcasting station 10, and the captioned still picture contents 42 is produced in the broadcasting station 10. In this case, in the broadcasting wave 40 from the broadcasting station 10, the control flag set by the caption broadcasting transmission system 20 is erased by the control flag erasing unit 70 (see FIG. 8) .

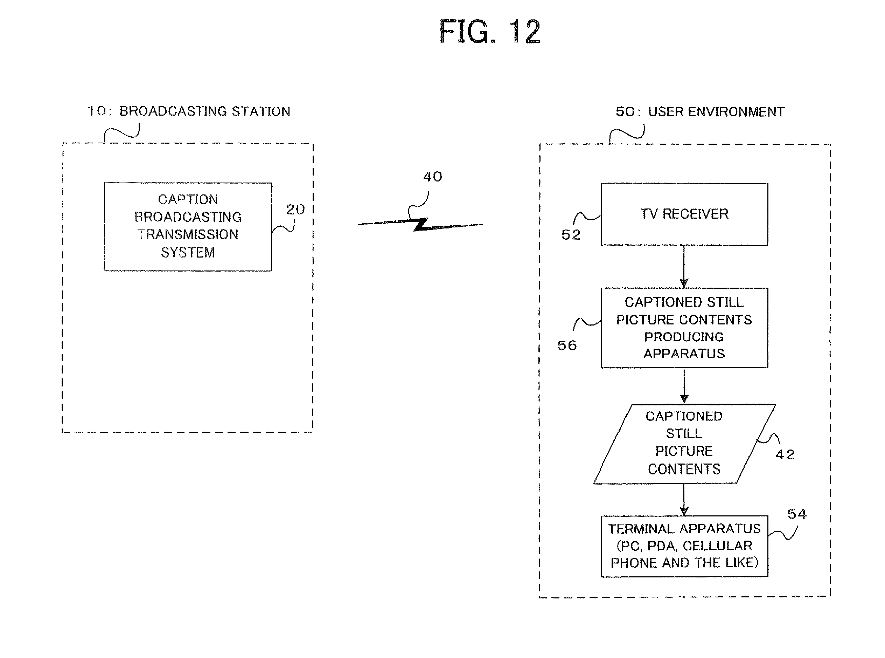

On the other hand, in a case that the control flag can be included in the captioned video signal included in the broadcasting wave 40 from the broadcasting station 10 and the broadcasting is permitted, as shown in FIG. 12, by providing a captioned still picture contents producing apparatus 56 in the user environment, the user himself or herself can produce the captioned still picture contents.

In this case, the captioned still picture contents producing apparatus 56 may be basically same as the apparatus provided at the broadcasting station 10. In this case, the captioned still picture contents producing apparatus can load the function in a hard disc recorder and a DVD recorder which record the TV program and the like. In addition, the captioned still picture contents producing apparatus may be configured not as a dedicated apparatus but as a software (i.e., a captioned still picture contents producing program) capable of operating on a computer such as a PC, and may be installed in the PC of the user to operate, too.

As another modification, by using a TV receiver function of a cellular phone, the still picture contents with the caption data can be generated, recorded and displayed. This modification corresponds to the configuration including everything, i.e., the TV receiver 52, the captioned still picture contents producing apparatus 56, the captioned still picture contents 42 and the like, in the terminal apparatus 54 in the user environment 50 shown in FIG. 12.

By the terrestrial digital broadcasting of 1 segment for a movable body, not only a simplified moving picture and sound but also the caption, which is an option, are broadcast as the data broadcasting. The transmission of the capture control flag in the digital broadcasting, described above in relation to FIG. 11, is also applied in this case.

By adding the function of receiving the digital TV broadcasting of 1 segment to the cellular phone and using the data storage function of a card memory added to the cellular phone, with a dedicated application program, the simplified moving picture is automatically captured as one still picture in each timing of the capture display, and is combined with the capture data to be stored in the memory. As for the terrestrial digital caption broadcasting of segment which is different from the normal caption broadcasting of displaying the caption at the position on the screen intended by a broadcaster, in relation to the employed broadcasting standard, a caption display mode and a position thereof are dependent on discretion of a manufacturer and free to some extent. Therefore, at the time of recording the captioned still picture, the method of superimposing the caption on the still picture to record them is feasible . However, a method of storing the still picture data and the caption data as one pair by the page unit can use a larger degree of the freedom of the display function.

The still picture and the caption data stored in the memory can be displayed by using the Internet display HTML browser, the data broadcasting display BML browser and the like, included in the cellular phone.

As described above, the captioned still picture contents according to the present invention are contents obtained by synthesizing the still picture making up the caption broadcasting program and the caption displayed during the caption broadcasting. As described above, the caption in the caption broadcasting program is such high quality information that the program contents can be understood enough without the sound. Therefore, by browsing the captioned still picture contents, the user can obtain almost equivalent information in comparison with the case that the user watches and listens to the caption broadcasting program. In addition, the captioned still picture contents according to the present invention is excellent in a case that not only the deaf people but also the general user use the contents in such an environment that the sound outputting is inappropriate, e.g., on a train, at a public place and the like.

### INDUSTRIAL APPLICABILITY

The present invention provides the apparatus and the program producing the captioned still picture contents from the captioned video signal such as the caption broadcasting. The contents producing apparatus can be the dedicated apparatus set up in the broadcasting station, and can be also incorporated in a recording and reproduction apparatus set up in a home, such as a DVD recorder, an HDD recorder and the like. In addition, the contents producing apparatus can be also provided through a recording media and a communication circuit as the program to be executed in the personal computer set up in the home.

## Claims

1. A captioned still picture contents producing apparatus comprising:
a receiving unit which receives a captioned video signal;
an extracting unit which extracts a control signal for producing a caption signal and contents from the captioned video signal;
a still picture capturing unit which captures an image in the video signal based on the control signal;
a caption image generating unit which generates a caption image based on the caption signal; and
a producing unit which synthesizes the caption image and the still picture to produce captioned still picture contents.

2. The captioned still picture contents producing apparatus according to claim 1, wherein the still picture capturing unit captures a still picture in the video signal corresponding to each caption signal.

3. The captioned still picture contents producing apparatus according to claim 1,
wherein the video signal is a video signal of recorded caption broadcasting,
wherein the extracting unit extracts the caption signal and the control signal from a frame having the caption signal in the video signal, and
wherein the still picture capturing unit captures an image of the frame.

4. The captioned still picture contents producing apparatus according to claim 1,
wherein the video signal is a video signal of real time caption broadcasting,
wherein the extracting unit extracts the caption signal and the control signal from a frame having the caption signal in the video signal, and
wherein the still picture capturing unit captures an image of another frame positioned behind the frame in terms of time.

5. The captioned still picture contents producing apparatus according to claim 1, wherein the video signal is an analog television signal, and wherein the extracting unit extracts the control signal from a vertical blanking interval of a frame having a caption signal in the analog television signal.

6. The captioned still picture contents producing apparatus according to claim 1, wherein the video signal is a digital television signal, and wherein the extracting unit extracts the control signal from private data in a PES having a caption signal in the digital television signal.

7. A computer program product in a computer-readable medium executed by a computer terminal, making the computer terminal function as:
a receiving unit which receives a captioned video signal;
an extracting unit which extracts a control signal for producing a caption signal and contents from the captioned video signal;
a still picture capturing unit which captures an image in the video signal based on the control signal;
a caption image generating unit which generates a caption image based on the caption signal; and
a producing unit which synthesizes the caption image and the still picture to produce captioned still picture contents.

8. A captioned still picture contents producing system comprising a captioned video signal generating apparatus and a still picture contents producing apparatus,
wherein the captioned video signal generating apparatus includes:
a receiving unit which receives a video signal and a caption signal;
a control signal generating unit which generates a control signal based on whether or not a caption is a real time caption; and
a signal generating unit which synthesizes the caption signal and the video signal and inserts the control signal to a predetermined position to generate a captioned video signal,
wherein the still picture contents producing apparatus includes :
a receiving unit which receives the captioned video signal;
an extracting unit which extracts the caption signal and the control signal from the captioned video signal;
a still picture capturing unit which captures an image in the video signal based on the control signal;
a caption image generating unit which generates a caption image based on the caption signal; and
a producing unit which synthesizes the caption image and the still picture to produce captioned still picture contents.

9. The captioned still picture contents producing system according to claim 8, wherein the control signal generating unit generates a control signal which designates a frame image from which the caption signal and the control signal are extracted as an image to be captured by the still picture capturing unit when the caption is not the real time caption, and which designates another frame image behind the frame image in terms of time from which the caption signal and the control signal are extracted, as the image to be captured by the still picture capturing unit when the caption is the real time caption.
